# EUROPÄISCHE PATENTSCHRIFT

(11) **EP 1 644 617 B1**
(45) Veröffentlichungstag und Bekanntmachung des Hinweises auf die Patenterteilung: **18.04.2007**
(21) Anmeldenummer: 04740402.5
(22) Anmeldetag: 29.06.2004
(51) Int. Cl.: F01M 11/00, F02B 67/04, F02B 75/06, F16F 15/26, F02F 7/00

(54) **ABDECKPLATTE FÜR EIN KURBELGEHÄUSE**
COVER PLATE FOR A CRANKCASE
PLAQUE DE RECOUVREMENT POUR UN CARTER DE VILEBREQUIN

(30) Priorität: 02.07.2003 DE 10329762
(43) Veröffentlichungstag der Anmeldung: 12.04.2006
(73) Patentinhaber: MTU FRIEDRICHSHAFEN GMBH, 88045 Friedrichshafen (DE)
(72) Erfinder: HUSTER, Joachim, 88048 Friedrichshafen (DE)
(86) Internationale Anmeldenummer: PCT/EP2004/007005
(87) Internationale Veröffentlichungsnummer: WO 2005/003526

(56) Entgegenhaltungen:
- EP-A- 0 903 474
- EP-A- 1 081 345
- DE-A- 10 306 152
- GB-A- 2 390 873
- US-A- 5 535 643

## Beschreibung

Die Erfindung betrifft eine Abdeckplatte zum Verschließen eines Kurbelgehäuses an dessen Unterseite nach dem Oberbegriff von Anspruch 1.

Aus der DE 198 55 562 C1 ist ein Kurbelgehäuse mit Kammern bekannt. Diese Kammern dienen u. a. als Ölvorratsräume. Aus der 100 33 416 C1 ist eine Abdeckplatte zum Verschließen dieses Kurbelgehäuses bekannt. Auf der Abdeckplatte sind die Hilfsaggregate angeordnet, beispielsweise die Pumpen für die Schmiermittelversorgung und Wärmetauscher. Auf der Abdeckplatte sind zwei Saugstellen zum Sammeln des Schmiermittels ausgebildet. Aus den Saugstellen wird das Schmiermittel über in der Abdeckplatte integrierte Kanäle von den Pumpen abgesaugt und in die Ölvorratsräume des Kurbelgehäuses gefördert. Die Pumpen sind als 3-Kammer-Pumpen mit zwei Saugkammern und einer Druckkammer ausgeführt. Problematisch sind die hohen Anforderungen an diese 3-Kammer-Pumpen, z. B. die sichere Förderung auch bei Schräglage der Brennkraftmaschine.

Aus der nicht vorveröffentlichten deutschen Patentanmeldung mit dem Aktenzeichen DE 103 06 152.5 ist eine Brennkraftmaschine mit zwei Ausgleichswellen bekannt. Eine der beiden Ausgleichswellen ist auf der zuvor beschriebenen Abdeckplatte gelagert. Angetrieben wird diese Ausgleichswelle über eine Stirnrad-Stufe von der Kurbelwelle. Die oben beschriebene Problematik wird durch diese Ausführung der Abdeckplatte nicht entschärft.

Aus der GB 2 390 873 A ist eine Brennkraftmaschine bekannt mit zwei Ausgleichswellen und zwei Pumpen, die auf den Enden der Wellen angeordnet sind.

Der Erfindung liegt die Aufgabe zu Grunde die Abdeckplatte mit einer Ausgleichswelle in Bezug auf die Schmiermittel-Förderung zu optimieren.

Die Aufgabe wird durch die Merkmale des Anspruchs 1 gelöst. Die Ausgestaltungen hierzu sind in den Unteransprüchen dargestellt.

Die Erfindung sieht vor, dass eine erste Pumpe auf dem kraftseitigen Ende der Ausgleichswelle und eine zweite Pumpe auf dem kraftgegenseitigen Ende der Ausgleichswelle angeordnet werden. Hierbei werden die Pumpen jeweils aus einem ersten und einem zweiten Zahnrad gebildet. Der Unterschied zum Stand der Technik besteht folglich darin, dass die Pumpen nicht mehr als separate Aggregate auf der Abdeckplatte montiert werden sondern unmittelbar der Ausgleichswelle zugeordnet sind. Die erste und zweite Pumpe sind jeweils unmittelbar an den Saugstellen angeordnet, sodass die Saugkanäle in der Abdeckplatte gegenüber dem Stand der Technik verkürzt sind. In einer Ausgestaltung der Erfindung wird vorgeschlagen, dass die erste Pumpe zwischen der Stirnrad-Stufe und der zweiten Pumpe angeordnet wird. Durch diese Ausführung wird bei Brennkraftmaschinen mit großen Höchstdrehzahlen der Grenzwert der Pumpenumfangsgeschwindigkeit eingehalten. Alternativ ist vorgesehen, dass die erste Pumpe aus dem Antriebs-Zahnrad der Ausgleichswelle und dem zweiten Zahnrad gebildet wird. Diese Ausführung ist für Brennkraftmaschinen mit geringen Höchstdrehzahlen vorgesehen, sofern die Umfangsgeschwindigkeit des Antriebs-Zahnrads unter dem Grenzwert der Pumpenumfangsgeschwindigkeit bleibt.

Um die Montage der Ausgleichswelle mit den Pumpen auf der Abdeckplatte zu verbessern, sieht die Erfindung vor, dass der Durchmesser des ersten Zahnrads dem Durchmesser eines Lagers entspricht, über welches sich die Ausgleichswelle an einer Fluid-Führungseinrichtung abstützt.

Die wesentlichen Vorteile der Erfindung bestehen darin, dass durch den Entfall bzw. Verkürzung der Saugkanäle in der Abdeckplatte diese einfacher herzustellen ist. Die 3-Kammer-Pumpen des Stands der Technik werden durch eine einfache 1-Kammer-Pumpe ersetzt, d. h. diese sind einfacher ausgeführt. Die bereits vorhandene Stirnrad-Stufe zum Antrieb der Ausgleichswelle übernimmt als Bestandteil der ersten Pumpe eine zusätzliche Funktion, d. h. der Integratiönsgrad wird erhöht. Durch die Anordnung der ersten und zweiten Pumpe auf der Ausgleichswelle wird eine wirkungsvolle Trockensumpf-Schmierung verwirklicht, bei welcher die Schräglauf-Fähigkeit der Brennkraftmaschine weiterhin gegeben ist.

In den Zeichnungen sind zwei Ausführungsbeispiele der Erfindung dargestellt.

Es zeigen:
- Fig. 1: die Abdeckplatte, Ansicht von der Kraftseite KS
- Fig. 2: eine Draufsicht der Abdeckplatte
- Fig. 3: die Abdeckplatte, Ansicht von der Kraftgegenseite KGS
- Fig. 4: einen Schnitt durch die Abdeckplatte
- Fig. 5: einen Schnitt der Abdeckplatte entlang der Linie CC
- Fig. 6: die Abdeckplatte, Sicht von der Kraftseite KS, zweite Ausführung
- Fig. 7: eine Draufsicht der Abdeckplatte, zweite Ausführung

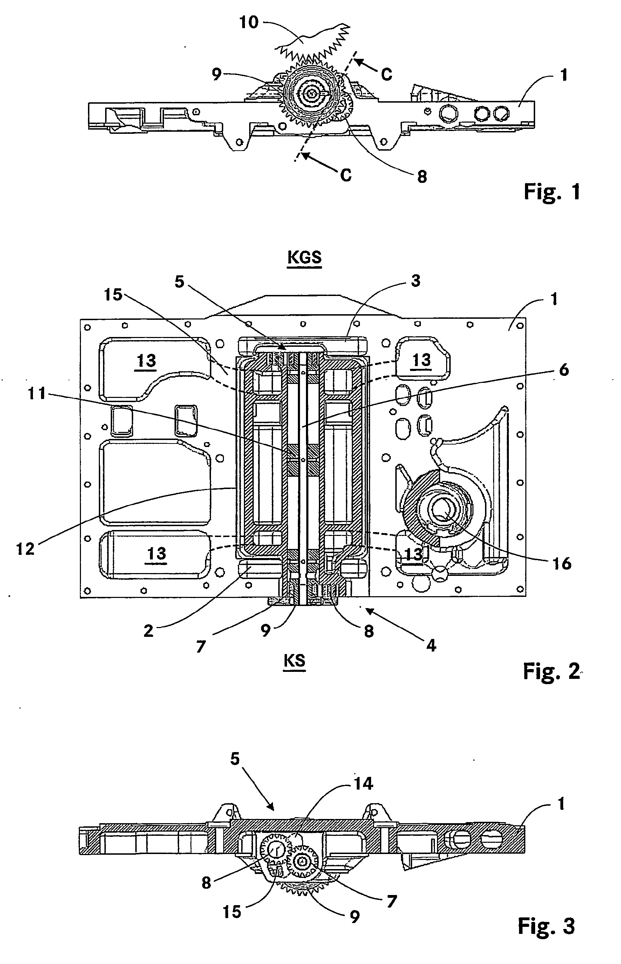

In der Figur 1 ist die Abdeckplatte 1 mit Sicht von der Kraftseite KS dargestellt. Die weitere Erläuterung erfolgt in Verbindung mit der Figur 2 und Figur 3. Bei einer Brennkraftmaschine ist die Kraftseite KS als diejenige Seite definiert, an welcher der Abtrieb erfolgt. An der Kraftseite KS werden an die Kurbelwelle beispielsweise eine Kupplung und Getriebe angeflanscht. Der Kraftseite KS liegt die Kraftgegenseite KGS gegenüber, siehe Figur 2. In Figur 1 ist mit Bezugszeichen 10 ein Abtriebs-Zahnrad dargestellt. Dieses ist auf der Kurbelwelle angeordnet. Das Abtriebs-Zahnrad 10 kämmt mit einem Antriebs-Zahnrad 9, welches auf der Ausgleichswelle 6 angeordnet ist. Die beiden Zahnräder 9 und 10 bilden eine Stirnrad-Stufe. Die Ausgleichswelle 6 ist über Lager 11 in einer Fluid-Führungseinrichtung 12 gelagert. Über die Fluid-Führungseinrichtung 12 wird das aus dem Triebwerksraum herabtropfende Schmiermittel einer ersten Saugstelle 2 und einer zweiten Saugstelle 3 zugeführt, siehe Figur 2. Am kraftseitigen Ende KS der Ausgleichswelle 6 ist eine erste Pumpe 4 angeordnet. Am kraftgegenseitigen Ende KGS der Ausgleichswelle 6 ist eine zweite Pumpe 5 angeordnet. Sowohl die erste Pumpe 4 als auch die zweite Pumpe 5 werden jeweils aus einem ersten Zahnrad 7 und einem zweiten Zahnrad 8 gebildet. Selbstverständlich können auch Toroid-Pumpen verwendet werden. Bei der Darstellung in der Figur 2 befindet sich die erste Pumpe 4 zwischen dem Antriebs-Zahnrad 9 und der zweiten Pumpe 5. Durch die beiden Pumpen 4 und 5 wird das Schmiermittel-aus den beiden Saugstellen 2 und 3 über Druckkanäle 15 zu Öffnungen 13 geführt. Die Druckkanäle 15 sind in der Figur 2 gestrichelt dargestellt. Über die Öffnungen 13 gelangt das Schmiermittel in die Ölvorratsräume des Kurbelgehäuses. Bezugszeichen 16 benennt eine Filteröffnung auf der Abdeckplatte 1.

Die Ansicht der Abdeckplatte 1 von der Kraftgegenseite KGS zeigt die Figur 3. Die zweite Pumpe 5, welche aus den beiden Zahnrädern 7 und 8 gebildet wird, fördert das Schmiermittel aus einem Saugkanal 14 in den Druckkanal 15.

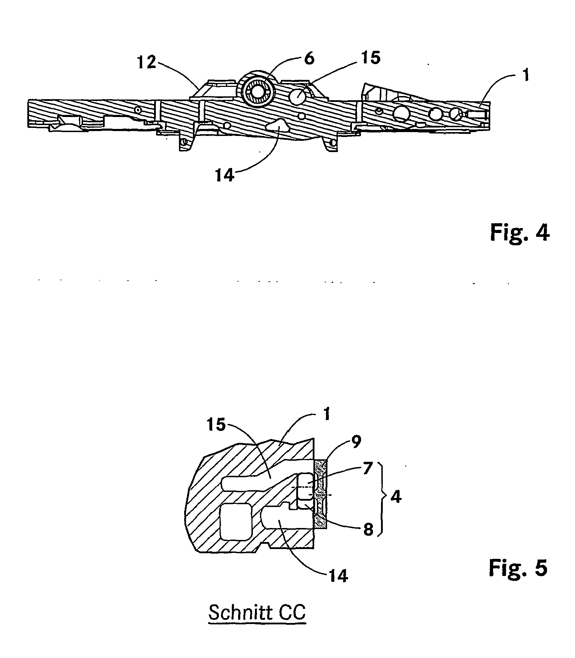

In Figur 1 ist eine Schnittlinie CC eingezeichnet. Das entsprechende Schnittbild ist in Figur 5 dargestellt. Aus diesem Schnittbild wird ebenfalls ersichtlich, dass die erste Pumpe 4 aus dem Saugkanal 14 das Schmiermittel in den Druckkanal 15 fördert.

Die Figur 4 zeigt einen Schnitt durch die Abdeckplatte 1. Ersichtlich sind der Saugkanal 14 und der Druckkanal 15. In diesem Schnittbild ist die Fluid-Führungseinrichtung 12 zu sehen über welche das aus dem Triebwerksraum herabtropfende Schmiermittel der ersten und zweiten Saugstelle 2 und 3 zugeführt wird. In der Fluid-Führungseinrichtung 12 ist die Ausgleichswelle 6 gelagert.

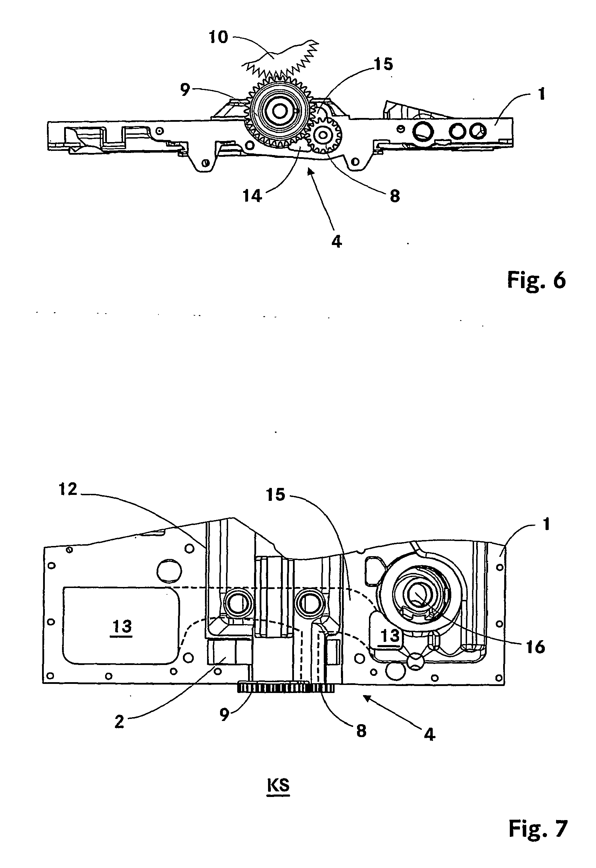

Die Figur 6 zeigt die Abdeckplatte 1 mit Sicht von der Kraftseite KS. Die weitere Beschreibung erfolgt zusammen mit der Figur 7. Bei dieser Ausführung wird die erste Pumpe 4 aus dem Antriebs-Zahnrad 9 und dem zweiten Zahnrad 8 gebildet. Gegenüber der Darstellung der Figur 2 entfällt somit das erste Zahnrad 7. Diese Ausführung ist für kleine Umfangsgeschwindigkeiten vorgesehen, d. h. für Brennkraftmaschinen mit niederem Drehzahlniveau. Die erste Pumpe 4 fördert aus dem Saugkanal 14 das Schmiermittel aus der ersten Saugstelle 2 über den Druckkanal 15 zu den Öffnungen 13, siehe Figur 7.

Die Vorteile der Erfindung sind:
- gegenüber dem Stand der Technik entfallen die Saugkanäle von den Saugstellen zu den Pumpen bzw. werden verkürzt, woraus eine einfachere Kerntechnik beim Herstellen der Abdeckplatte mit einem entsprechenden Kostenvorteil resultiert;
- die vorhandene Stirnrad-Stufe übernimmt eine zusätzliche Funktion als Bestandteil der ersten Pumpe, wodurch der Integrationsgrad erhöht wird;
- die Drei-Kammer-Pumpen des Stands der Technik werden durch Ein-Kammer-Pumpen ersetzt, welche eine einfacheren Aufbau aufweisen;
- eine sichere Trockensumpf-Schmierung mit entsprechender Schräglauf-Fähigkeit ist weiterhin gegeben.

### Bezugszeichen

- 1: Abdeckplatte
- 2: erste Saugstelle
- 3: zweite Saugstelle
- 4: erste Pumpe
- 5: zweite Pumpe
- 6: Ausgleichswelle
- 7: erstes Zahnrad
- 8: zweites Zahnrad
- 9: Antriebs-Zahnrad
- 10: Abtriebs-Zahnrad
- 11: Lager
- 12: Fluid-Führungseinrichtung
- 13: Öffnungen
- 14: Saugkanal
- 15: Druckkanal
- 16: Filteröffnung

## Patentansprüche

1. Abdeckplatte (1) zum Verschließen eines Kurbelgehäuses an dessen Unterseite mit Saugstellen (2, 3) zum Sammeln von Schmiermittel, mit Pumpen (4, 5) zum Absaugen des Schmiermittels aus den Saugstellen (2, 3) und mit einer Ausgleichswelle (6), welche auf der Abdeckplatte (1) gelagert ist und von einer Kurbelwelle angetrieben wird,
**dadurch gekennzeichnet,**
**dass** eine erste Pumpe (4) auf dem kraftseitigen Ende (KS) der Ausgleichswelle (6) und eine zweite Pumpe (5) auf dem kraftgegenseitigen Ende (KGS) der Ausgleichswelle (6) angeordnet werden.

2. Abdeckplatte (1) nach Anspruch 1,
**dadurch gekennzeichnet,**
**dass** die erste (4) und zweite Pumpe (5) jeweils aus einem ersten (7) und zweiten Zahnrad (8) gebildet werden.

3. Abdeckplatte (1) nach Anspruch 2,
**dadurch gekennzeichnet,**
**dass** am kraftseitigen Ende (KS) der Ausgleichswelle (6) ein Antriebs-Zahnrad (9) angeordnet wird, welches mit einem Abtriebs-Zahnrad (10) der Kurbelwelle kämmt und die erste Pumpe (4) zwischen dem Antriebs-Zahnrad (9) und der zweiten Pumpe (5) angeordnet wird.

4. Abdeckplatte (1) nach Anspruch 3,
**dadurch gekennzeichnet,**
**dass** die Ausgleichswelle (6) über Lager (11) in einer Fluid-Führungseinrichtung (12) gelagert wird und der Durchmesser des ersten Zahnrads (7) dem Durchmesser der Lager (11) entspricht.

5. Abdeckplatte (1) nach Anspruch 2,
**dadurch gekennzeichnet,**
**dass** am kraftseitigen Ende (KS) der Ausgleichswelle (6) ein Antriebs-Zahnrad (9) angeordnet wird, welches mit einem Antriebs-Zahnrad (10) der Kurbelwelle kämmt und die erste Pumpe (5) aus dem Antriebs-Zahnrad (9) der Ausgleichswelle (6) und dem zweiten Zahnrad (8) gebildet wird.

## Claims

1. Cover plate (1) for closing a crankcase on its underside with suction points (2, 3) for collecting lubricant, with pumps (4, 5) for drawing off the lubricant from the suction points (2, 3) and with a countershaft (6) that is supported on the cover plate (1) and is driven by a crankshaft, **characterized in that** a first pump (4) is arranged on the power-driven end (KS) of the countershaft (6) and a second pump (5) is arranged on the end of the countershaft (6) opposite the power-driven end (KGS).

2. Cover plate (1) according to Claim 1, **characterized in that** the first (4) and the second pump (5) are each formed by a first (7) and a second gear wheel (8).

3. Cover plate (1) according to Claim 2, **characterized in that** a drive gear wheel (9) is arranged at the power-driven end (KS) of the countershaft (6), said gear wheel meshing with a driven gear wheel (10) of the crankshaft, and that the first pump (4) is arranged between the drive gear wheel (9) and the second pump (5).

4. Cover plate (1) according to Claim 3, **characterized in that** the countershaft (6) is supported by means of bearings (11) in a fluid guide device (12), and that the diameter of the first gear wheel (7) corresponds to the diameter of the bearings (11).

5. Cover plate (1) according to Claim 2, **characterized in that** a drive gear wheel (9) is arranged at the power-driven end (KS) of the countershaft (6), said gear wheel meshing with a driven gear wheel (10) of the crankshaft, and that the first pump (5) is formed by the drive gear wheel (9) of the countershaft (6) and the second gear wheel (8).

## Revendications

1. Plaque de recouvrement (1) pour fermer un carter de vilebrequin sur sa face inférieure, murie de zones d'aspiration (2, 3) pour collecter du lubrifiant, de pompes (4, 5) pour aspirer le lubrifiant à partir des zones d'aspiration (2, 3) et d'un arbre de compensation (6) qui est logé sur la plaque de recouvrement (1) et qui est entraîné par un vilebrequin, **caractérisée en ce qu'**une première pompe (4) est disposée sur l'extrémité côté force (KS) de l'arbre de compensation (6) et une deuxième pompe (5) est disposée sur l'extrémité opposée à la force (KGS) de l'arbre de compensation (6).

2. Plaque de recouvrement (1) selon la revendication 1, **caractérisée en ce que** la première (4) et la deuxième pompe (5) sont formées chacune par une première (7) et une deuxième roue dentée (8).

3. Plaque de recouvrement (1) selon la revendication 2, **caractérisée en ce que** sur l'extrémité côté force (KS) de l'arbre de compensation (6) est disposée une roue d'entraînement dentée (9), qui s'engrène dans une roue d'entraînement dentée (10) du vilebrequin et **en ce que** la première pompe (4) est disposée entre la roue d'entraînement dentée (9) et la deuxième pompe (5).

4. Plaque de recouvrement (1) selon la revendication 3, **caractérisée en ce que** l'arbre de compensation (6) est logé par l'intermédiaire de paliers (11), dans un dispositif de guidage de fluides (12) et **en ce que** le diamètre de la première roue dentée (7) correspond au diamètre des paliers (11).

5. Plaque de recouvrement (1) selon la revendication 2, **caractérisée en ce que** sur l'extrémité côté force (KS) de l'arbre de compensation (6) est disposée une roue d'entraînement dentée (9) qui s'engrène avec une roue d'entraînement dentée (10) du vilebrequin et **en ce que** le première pompe (5) est formée de la roue d'entraînement dentée (9) de l'arbre de compensation (6) et de la deuxième roue dentée (8).
